# EUROPEAN PATENT APPLICATION

(11) **EP 4 528 221 A1**
(43) Date of publication of application: **26.03.2025**
(21) Application number: 23198929.4
(22) Date of filing: 21.09.2023
(51) Int. Cl.: G01C 11/08, G01C 21/00, G06F 16/29, G06F 16/587, G06T 7/73, G06V 10/74, G06V 20/56

(54) **METHODS, SYSTEMS, AND COMPUTER PROGRAM PRODUCTS FOR GEOREFERENCING IMAGE DATA**

(71) Applicant: Helsing GmbH, 81671 Munich (DE)
(72) Inventor: HENDRICH, Florian, 81671 Munich (DE); GONZALEZ, Mathieu, 81671 Munich (DE); WENZEL, Patrick, 81671 Munich (DE); EBERHARD, Thomas, 81671 Munich (DE)
(74) Representative: Rummler, Felix

(57) **Abstract**

A computer-implemented method of georeferencing pixels in an image or video frame, the method comprising: receiving first image data of a first image or a first video frame from an image sensor, in particular an image sensor comprised by a movable sensor platform, more particularly an aerial vehicle; determining first georeferences of one or more, in particular a predetermined number of, first key points in the first image data based on matching the first key points to corresponding key points in georeferenced reference image data, in particular satellite data, different from the first image data; and determining, based on the determined first georeferences of the first key points, a respective second georeference of at least one pixel in the first image data, the first video frame, and/or in subsequently received second image data of a second image or a second video frame from the image sensor.

## Description

### Technical Field

The present disclosure relates to methods, systems, and computer program products for georeferencing image data. The present disclosure is applicable in the field of guidance, navigation and control, in particular for navigation systems.

### Background

A frequent problem in the field of navigation and/or the field of localizing landmarks is georeferencing a detected point on the surface of the earth.

Known solutions include manually marking a pixel on a satellite image and determining a related coordinate. This approach is cumbersome. Other known solutions are based on using a global navigation satellite system. They suffer from low accuracy and high computational load. Moreover, they do not allow any georeferencing when no navigation satellite system is available.

There is a need for systems and methods that overcome these shortcomings.

### Summary

Disclosed and claimed herein are systems, methods, and devices for georeferencing image data.

A first aspect of the present disclosure relates to a computer-implemented method of georeferencing pixels in an image or video frame. The method comprises the following steps:
- receiving first image data of a first image or a first video frame from one or more first image sensors, in particular one or more first image sensors comprised by a, in particular static or movable, sensor platform, more particularly an aerial vehicle;
- determining first georeferences of one or more, in particular a predetermined number of, first key points in the first image data based on matching the first key points to corresponding key points in georeferenced reference image data, in particular satellite data, different from the first image data; and
- determining, based on the determined first georeferences of the first key points, a respective second georeference of at least one pixel in second image data from one or more of the first image sensors and/or one or more second image sensors.

The second image data may include:
- the first image data and/or the first video frame, and/or
- third image data, and/or
- subsequently or previously received image data of a second image or a second video frame.

This method has the advantage that the key points can be determined at high accuracy and low computational cost. The step of determining the first georeferences by matching the first key points to the corresponding key points allows a determination of a first set of key points at high accuracy, for example by using a machine-learning based key point matching algorithm. However, the number of first key points determined in this way can be lower than the number of key points of interest in total because in a subsequent step, at least a second georeference is determined based on the first georeferences. This subsequent step may be executed using a computationally inexpensive algorithm, such as interpolation. Thereby, the method may be applied to determine a high number of georeferences at low computational cost. Preferably, the second image sensors are comprised in the sensor platform. The first and second image sensors may have overlapping fields of view and positions of pixels in one or more of the first sensors may be mapped to positions of pixels in one or more of the second sensors using a relative transformation matrix. This allows transforming the positions of the first key points on the first sensor to positions on the second sensor.

Preferably, the key points include any point of interest in the image data. A key point may be represented by a pixel, a line or any other geometric structure of pixels comprised in the image data. More preferably, a key point in the first image data includes any part or feature of the image data that is detectable by an image processing algorithm, in particular such that there is a corresponding key point in the second image data. A key point may be a unique point, e.g. may have a unique descriptor with respect to other points or pixels within the same image data. Said unique descriptor can be dependent or independent of pixel values. In particular, key points may for example be identified as features in the image data that show, e.g. subtle or significant, changes in one or more pixel values, such as a grayscale or a colour scale value compared to surrounding pixels. A key point may refer to an edge, a corner, or a similar discernible structure in the image data. That is, depending on the algorithm, even very smooth features may be detected. This may include structures that are not visible to the human eye. Preferably, the second georeference is determined by interpolation of the (locations of the) first key points and/or the first key points' geo references.

In an embodiment, the method further comprises determining first elevation data of one or more of the first key points. Additionally or alternatively, in this embodiment, the method includes determining second elevation data of the at least one pixel based on the first georeferences and/or the first elevation data. These steps add additional information to the georeferences. This information may be used, together with the other data in the georeferences, in a later step of determining a pose of a platform comprising the image sensor. The pose of the platform is preferably expressed as 6DoF (position, tilt angle). The pose may include a pose relative to a part of the surface of the earth. Determining the pose preferably includes receiving the pose from the sensor platform, looking up previous poses, and/or determining the pose based on image data, preferably previously determined image data.

Using the elevation data increases the accuracy of a determination of the pose, in particular determination of an altitude the platform. The second elevation data may be determined by interpolation of the first georeferences and/or first elevation data, which allows further limiting the necessary computing resources. More particularly, the second elevation data may be determined by interpolation of the first elevation data. Alternatively, or additionally, a 2-dimensional georeference, such as a pair of a latitude and longitude geographic coordinates, of the pixel is determined by interpolation of the first georeferences, wherein the elevation data of the pixel is determined based on separated elevation data. In particular, a 3D elevation map may be used as a look-up table. The 3D elevation map may comprise entries that relate an elevation values to pairs of latitude and longitude.

In a further embodiment, determining the second georeference includes tracking one or more of the first key points on the second image data to determine one or more second key points on the second image data. It is preferred that the second image data include subsequently or previously captured video frames, so that the apparent motion of the objects or features at the key points is tracked. Then, the second key points correspond to these features. The second image data may thus be captured earlier than or later than the first image data. In embodiments, the second image data may include the first image data and/or third image data captured by the same or another image sensor, so that tracking the first key points allows determination of second key points corresponding to the features at the first key points. In other words, object features are located on images, which may have been captured by different sensors. The second key points may correspond to the tracked first key points. A number of tracked first key points is preferably below a predetermined threshold. This allows determining second key georeferences of second key points that are not on the same image or video frame. Tracking may be implemented by a visual odometry algorithm in a computationally less expensive way compared to determining additional georeferenced data and matching the key points to these data. Further second key points may be determined using interpolation, which can be implemented in an even less computationally expensive way. To do so, only a limited number of first key points, i.e. a sparse set of first key points, need to be tracked. Reducing the computational cost is particularly important when implementing the method on an unmanned aerial vehicle as the sensor platform.

In yet another embodiment, determining the second georeference further includes determining the second georeference of the at least one pixel corresponding to, and/or included in, at least one of the tracked second key points on the second image data. This may be implemented by assigning the known georeference of the corresponding key point on the georeferenced reference data as the second georeference to the second key point.

In a further embodiment, tracking the key points includes the following steps:
- determining an optical flow of at least one second video frame comprised in the subsequent video frames compared to a further video frame preceding or following, preferably immediately preceding or following, the second video frame; and
- determining the second key points on the second video frame based on the optical flow, preferably by translating the first key points by an initial displacement velocity vector proportional to the optical flow.

The optical flow is a vector field describing the displacement of each pixel between two consecutive video frames. The optical flow may be determined using any suitable method, such as the Lucas-Kanade method, which is a computationally inexpensive method of visual odometry. Alternatively, the Farnebäck algorithm may be used as described below.

In a further embodiment, determining an optical flow includes the following steps:
- determining one or more intermediate key points on an intermediate video frame comprised in the subsequent video frames, wherein the intermediate key points correspond to the first key points; and
- determining, based on the first and intermediate positions, the initial displacement velocity vector indicative of an initial average optical flow.

Preferably, the intermediate video frame is a, in particular the next, video frame received after the first video frame, and before the second video frame. The initial displacement velocity vector is preferably determined as a Euclidean distance in pixel positions divided by a time interval between video frames. The advantage of this approach is that determining the optical flow is computationally cheap. Thereby, the second positions of the tracked key points on the second video frames are determined at lower computational cost than when using the georeferencing algorithm used for the first positions.

In yet a further embodiment, determining the second georeference comprises the following steps:
- computing a transform, such as a projective transformation, preferably a homography, that maps the first key points to the second key points;
- applying the transform to the first georeferences and/or one or more further georeferences in the first image data.

This allows determining the georeferences in a computationally less expensive way.

In a further embodiment, determining the first georeferences comprises the following steps:
- receiving the georeferenced reference image data; and
- determining, by a machine learning algorithm, preferably a trained Siamese neural network, the first key points on the first image data and the corresponding key points on the georeferenced reference image data.

A machine learning algorithm is particularly advantageous for processing image data and can increase the reliability of the determination of the georeferences. In particular, a machine learning algorithm can be trained to find corresponding key points reliably. In other words, the hypothesis, or target function, of the machine learning algorithm can be a correspondence in key points. This allows choosing, by the machine learning algorithm, first key points that can be reliably matched, whereas key points less suitable for matching may be georeferenced a later step.

In a further embodiment, the method comprises determining one or more second georeferences. The method further comprises determining a pose of the platform based on the first georeferences and/or the one or more second georeferences. of the selected video frame. This enables a movable platform to navigate in an environment without other navigation aids. For example, an unmanned aerial vehicle may navigate even when no global navigation satellite system is available.

In another embodiment, determining of one or more key points includes application of an ORB key point detector and/or SIFT key point detector. The ORB and SIFT key point detectors are known reliable detectors. They may be preferably used for key point detection in subsequent frames, for example the intermediate frame. This is because the trade-off between accuracy and low computational cost can be made there more towards low computational cost.

A second aspect of the present disclosure relates to a system comprising one or more processors and one or more storage devices. The system is configured to perform the computer-implemented method of the first aspect of the present disclosure.

A third aspect of the present disclosure relates to a computer program product for loading into a memory of a computer. The computer program product comprises instructions, that, when executed by a processor of the computer, cause the computer to execute a computer-implemented method of the first aspect of the present disclosure.

In an embodiment, a non-transitory computer-readable storage medium is provided that stores instructions executable by one or more processors for clustering one or more electromagnetic emitter signals. The instructions comprise any of the steps of a method of the first aspect of the present disclosure.

All properties and embodiments that apply to the first aspect also apply to the second aspect and the third aspect.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart of a computer-implemented method 100 of georeferencing pixels in an image or video frame.
- Figure 2 shows a block diagram of image data and georeferences.
- Figure 3 shows a block diagram of subsequent video frames 300.
- Figure 4 shows a schematic diagram of a scenario 400.
- Figure 5 shows a block diagram of a key point detector 500.

### Detailed description of the preferred embodiments

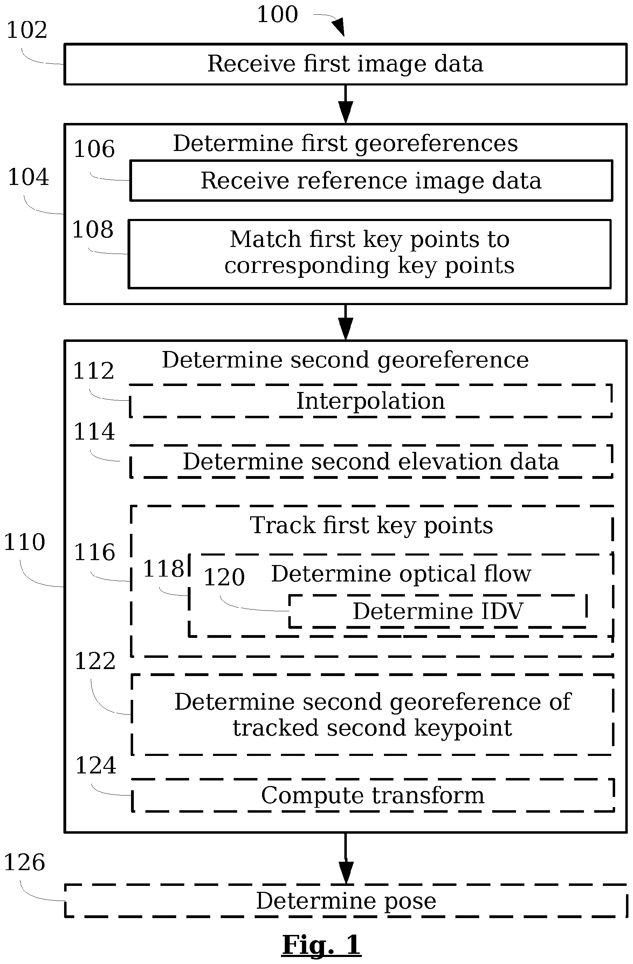

Figure 1 shows a flow chart of a computer-implemented method 100 of georeferencing pixels in an image or video frame. Method 100 may be executed by a computer system, in particular a computer system including key point detector 500. The computer-implemented method 100 begins by receiving, 102, first image data 200.

At 104, first georeferences 208, 210, 212, 214 are determined. This step includes determining reference image data 224. The reference image data 224 is already georeferenced, i.e., contains information that permits determining at least latitude or longitude, and may be determined by receiving, 106, the reference image data 224, e.g., from a file server via a network, or by loading the reference image data 224 from a storage medium.

At step 108, the first key points 204 on the first image data 200 are matched to corresponding key points 228 on the reference image data 224. This step may be executed by determining the key points on each of the images by a key point detector such as the ORB key point detector 506 and/or the SIFT key point detector 508, or any other key point detector, including a key point detector that is based on a trained neural network, and subsequently determining which key point on the reference image data 224 corresponds to which key point on the first image data 200, e.g. by processing the positional data by a classification or clustering algorithm. It is preferred to use a machine learning algorithm 502 to execute the tasks of determining key points on the first image data 200 and the corresponding key points on the reference image data 224. In particular, the machine learning algorithm can determine key points on the first image data 200 and on the reference image data 224, and match the key points to find correspondences. The machine learning algorithm can determine the key points such that matching between the first image data 200 and the reference image data determines the location of the key points. It is more preferred to use a neural network, such as a Siamese neural network 504, to match the key points. The reference image data 224 and the first image data may be processed simultaneously, in particular using the same weights. Step 104 further includes assigning the georeferences 208, 210, 212, 214 to the first key points 204 and the corresponding key points 228 based on the geographical information included into the reference image data 224. This may include longitude, latitude, and preferably also elevation data 216, 218, 220, 222. In particular, the latitude and longitude data may be read from a first georeferenced image file comprising satellite images, such as a GeoTIFF file, included in the reference image data 224, and the elevation data may be read from a height profile file separate from the first georeferenced image file. Alternatively, or additionally, the elevation data may be read from, i.e. be included in, the first georeferenced image file. After step 104, the georeferences of the first key points 204 on the first image data 200 have been determined. However, the first image data 200 are not necessarily fully georeferenced because not all georeferences of all pixels in the first image data 200 are known.

At step 110, a second georeference of a pixel 206 is determined. In an embodiment, the geographic location shown by pixel 206 is calculated to determine a second georeference 230. This preferably includes interpolation, 112, of the first georeferences 208, 210, 212, 214. Optionally, also an elevation of the geographic location shown by pixel 206 is calculated to determine, at step 114, second elevation 232. Step 114 may include interpolating the elevation between the key points, which can be executed without requiring the latitude or longitude as inputs. Moreover, latitude and longitude related to pixel 206 may be determined first to look up second elevation in the reference image data 224. However, it is preferred to combine the latitude, longitude, and elevation of the key points, and preferably one or more intermediate points included in the height profile file, to determine a sparse 3-dimensional points, and interpolating the coordinates of these points to determine the latitude, longitude, and elevation of the pixel 206. This has the advantage that available satellite data, which contains only geodetic coordinates, can be combined with a height profile determined by aerial imagery or radar measurements to provide a 3-dimensional georeferenced model, which enhances the reliability of the determination of the second georeference 230.

Alternatively or additionally, step 110 may include tracking, 116, the first key points 204, on subsequent video frames 400. This allows determining corresponding key points, such as key points 304, on one or more of the subsequent video frames 400. The tracking may be executed by algorithms that require less computing power than the algorithms that execute the steps of matching the key points in step 108. This allows increasing the efficiency of the process 100. Moreover, it is preferred to receive a predetermined threshold number of key points and select one or more key points below or identical to the threshold and only track these key points. If, for example, the number of key points matched in step 204 is below the predetermined threshold, all of these key points may be matched without further limitation. If, however, the number of key points matched in step 204 exceeds the threshold, some key points may be excluded from tracking, for example the key points determined with lowest confidence values related to a determination accuracy. This further reduces the compute workload.

Step 110 may further include determining, 118, the second georeference 230 of the at least one pixel 206 corresponding to at least one of the tracked second key points 302 on the second image data 300. This steps is computationally inexpensive because the georeferences of the second key points 302 are identical to the first georeferences 208, 210, 212, 214 of the first key points 204 of first image data 200.

Returning to step 116 of tracking the first key points, this step may include tracking the key points using an optical flow 308. In particular, the optical flow 308 may be determined by the Lucas-Kanade method. This method may include determining intermediate key points 316 from an intermediate video frame 314, for example a video frame received in a short predetermined time interval after the first image data 200. The time interval may be of the order of some tens of milliseconds. The intermediate key points may be determined using an ORB key point detector 506 or SIFT key point detector 508, which is computationally inexpensive. Since the key points have been displaced during this time interval only by a small shift, the intermediate key points 316 may be matched to the first key points 204 on the first image data 200 by a least squares minimization of a Euclidean distance. This allows determining displacement vectors from each of the first key points 204 to the corresponding one of the intermediate key points 316. The displacement vectors may be averaged to determine an initial displacement velocity vector 310 indicative of an initial average optical flow, which in turn can be used to initialize an algorithm that uses the Lucas-Kanade method to determine the optical flow of this and subsequent images. In turn, the optical flow can be used to determine the position of second key points 304 on second video frame 302 without recognizing the key points on the second video frame again. Rather, the first key points are displaced by a displacement vector proportional to the optical flow. This allows reducing the necessary computations steps for the determination of the second key points 304.

Step 110 may further include computing, 124, a transform, preferably a homography transform, that maps the first key points to the second key points, and applying the transform to the first georeferences and/or one or more further georeferences in the first image data.

At optional step 142, a pose of an image detector on a movable vehicle is determined. A movable vehicle may include an aircraft, such as an unmanned aerial vehicle (UAV). The positions of one or more pixels on the second image data, such as second video frame 302, may be related to a position of the camera by camera data. The use of georeferenced pixels thus allows to localize the movable vehicle.

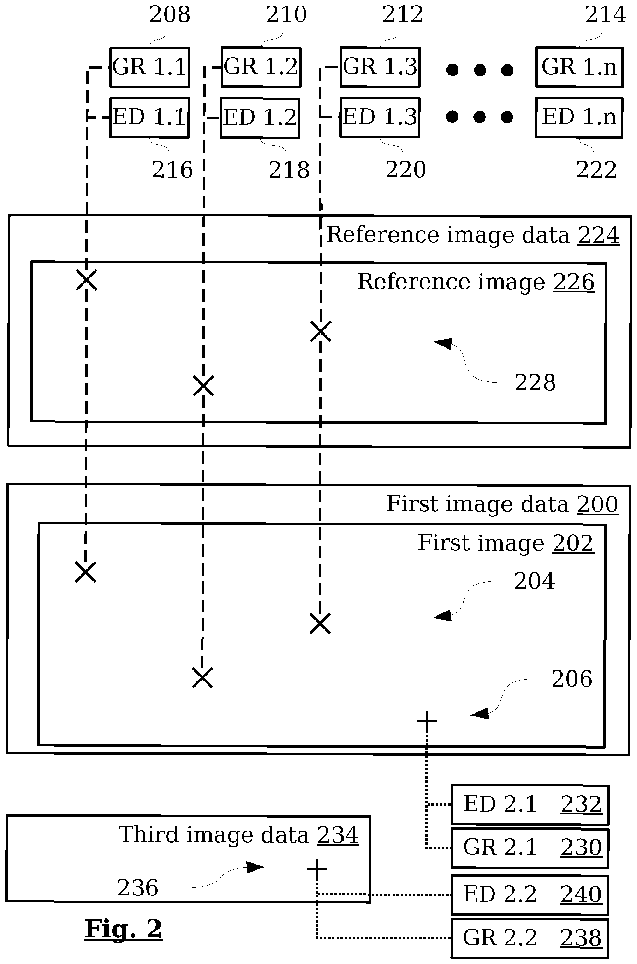

Figure 2 shows a block diagram of image data and georeferences.

The first image data 200 may include an image 201, such as a digital image, or a video frame of a video. The first image data 200 may be stored as red-green-blue (RGB) colour image. The first image data 200 may be recorded by first image sensors 404 or second image sensors 406. The first image data 200 comprises one or more key points 204. Here, three key points 204 are shown, but the number may differ according to the image. A key point may be represented by a pixel comprised in the image data. A key point may include any point of interest in the image data. More preferably, a key point in the first image data 200 includes any part or feature of the image data that is detectable by an image processing algorithm such that there is a corresponding key point in the second image data. Key points, may for example, be identified as features in the image data that show, e.g. subtle or significant, changes in one or more pixel values, such as a grayscale or a colour scale value compared to surrounding pixels. A key point may refer to an edge, a corner, or a similar discernible structure in the image data. That is, even very subtle changes between values of proximate pixels may be enough to determine a key point. The first image data 200 further comprises a pixel 204 of which a georeference is to be determined. Pixel 206 may comprise a key point, e. g. being detectable by a key point detection algorithm, or being manually identified as a key point. However, pixel 206 may include any point in the image. Pixel 206 may be arbitrarily chosen by receiving an input, such as column and line indices, from a user.

The georeference dataset 206 includes first georeferences (GR) 208, 210, 212, 214. Each first georeference 208, 210, 212, 214 is related to a key point. Each first georeference 208, 210, 212, 214 may include geographic coordinates of the key point, for example longitude and latitude coordinates of a spherical or geodetic coordinate system. One or more of the first georeferences 208, 210, 212, 214 may consist of the geographic coordinates. However, in addition to one or more of the first georeferences 208, 210, 212, 214, there may be further included elevation data 216, 218, 220, 222 indicating an elevation of a key point, which may be specified as elevation in meters above the reference geoid.

The reference image data 224 include a reference image 226. The reference image data 224 are georeferenced, i.e. they include an indication of geographic coordinates that permits determining the geographic coordinates, e.g. latitude or longitude, and preferably also elevation, of every point on a reference image 226. Reference image data 224 may include a set of satellite images 226, or aerial photographic images. The reference image data 224 may be provided in a georeferenced image data format, such as GeoTIFF. The key points 226 correspond to the key points 202 on the first image data. Generally speaking, two key points in images showing the same object may be said to correspond if they relate to the same feature of the object.

Optionally, the second image data may comprise third image data 234. Whereas first image data 200 may be provided by a first sensor 404 of the sensor platform 402, third image data may be provided by a second sensor 406 of the sensor platform 402. The first image data 200 and the third image data 234 may be connected by a mapping that allows correlating the positions of objects on the first image data 200 and the third image data 234. Thereby, the positions of the key points 204 on the first image data 200 may be correlated to positions on the third image data. The second georeference 238 and/or the second elevation data 240 of the pixel 236 on the third image data 234 may be determined using the correlation, and by interpolating the first georeferences and/or first elevation data.

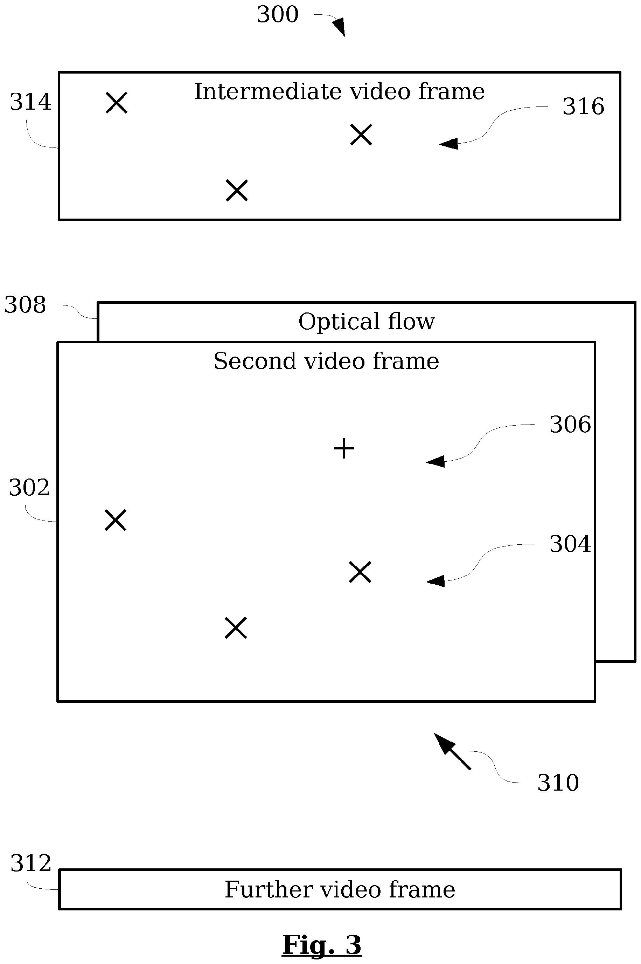

Figure 3 shows a block diagram of subsequently or previously received image data 300. The image data 300 are recorded earlier or later than first image data 200. Second video frame 302 may be recorded at a larger temporal distance to the first image data 200 than intermediate video frame 314.Further video frame 312 may be recorded earlier or later than second video frame 302. The second image data 300 may include an image, such as a digital image, or a video frame of a video. The second image data may be stored as red-green-blue (RGB) colour image. The second image data may be recorded by image sensor 404. The second image data 300 comprises one or more key points 302. Here, three key points 302 are shown, but the number may differ according to the image. A key point may be represented by a pixel comprised in the image data. A key point may include any point of interest in the image data. More preferably, a key point in the second image data includes any part or feature of the image data that is detectable by an image processing algorithm such that there is a corresponding key point in the second image data. Key points, may for example, be identified as features in the image data that show significant changes in one or more pixel values, such as a grayscale or a colour scale value compared to surrounding pixels. A key point may refer to an edge, a corner, or a similar discernible structure in the image data. The second image data 300 further comprises a pixel 304 of which a georeference is to be determined. Pixel 304 may comprise a key point, e. g. being detectable by a key point detection algorithm, or being manually identified as a key point. However, pixel 304 may include any point in the image. Pixel 304 may be arbitrarily chosen by receiving an input, such as column and line indices, from a user.

Second image data 300 may further include an optical flow 324. The optical flow 324 includes data describing the displacement of one or more pixels between two consecutive video frames. The optical flow may be determined using the Lucas-Kanade method as described in: Lucas and Kanade: "An Iterative Image Registration Technique with an Application to Stereo Vision". Proceedings of Imaging Understanding Workshop, pp. 121-130 (1981). The Lucas-Kanade method is adapted to determine the optical flow for a sparse set of pixels and can be applied to determine the displacement of the key points.

An optical flow may alternatively be determined by the algorithm described in Farnebäck, G. (2003). "Two-Frame Motion Estimation Based on Polynomial Expansion". In: Bigun, J., Gustavsson, T. (eds) Image Analysis. SCIA 2003. Lecture Notes in Computer Science, vol 2749. Springer, Berlin, Heidelberg. https://doi.org/10.1007/3-540-45103-X_50. The Farnebäck algorithm has the advantage that it is a dense optical flow algorithm, i.e. it can be used to determine the displacement of each pixel directly.

The optical flow 324 may be stored as a vector field comprising a number of entries identical to the number of pixels in the second image 301. Each entry may comprise a vector indicating the velocity and direction of apparent movement of the image. Magnitudes of the vectors or their components may be specified as a displacement per time between frames, and measured, e. g. in pixels per millisecond.

The image data may also comprise an initial displacement velocity vector 326. This vector 326 indicates an image displacement between two consecutive frames, which may be identical to an average of the vectors of an optical flow associated with one of the images. The vector 326 may be usable to initialize an algorithm to determine the optical flow. The initial displacement velocity vector 326 is preferably determined as a Euclidean distance in pixel positions divided by a time interval between video frames.

The georeference dataset 306 includes second georeferences (GR) 308, 310, 312, 314. Each second georeference 308, 310, 312, 314 is related to a key point. Each second georeference 308, 310, 312, 314 may include geographic coordinates of the key point, for example longitude and latitude coordinates of a spherical or geodetic coordinate system. One or more of the second georeferences 308, 310, 312, 314 may consist of the geographic coordinates. However, one or more of the second georeferences 308, 310, 312, 314 may further include elevation data 316, 318, 320, 322 indicating an elevation of a key point, which may be specified as elevation in meters above the reference geoid.

The subsequent video frames 400 may include the second video frame 402, the further video frame 404, and the intermediate video frame 406. Preferably, the intermediate video frame is the next video frame received after the first video frame, and before the second video frame. Each of the video frames may include key points, such as key points in the second video frame 402 and/or further video frame 404 (not shown), as well as intermediate key points 408 comprised in intermediate video frame 406. Intermediate key points 408 preferably correspond to the first key points 202 comprised in the first image data 200.

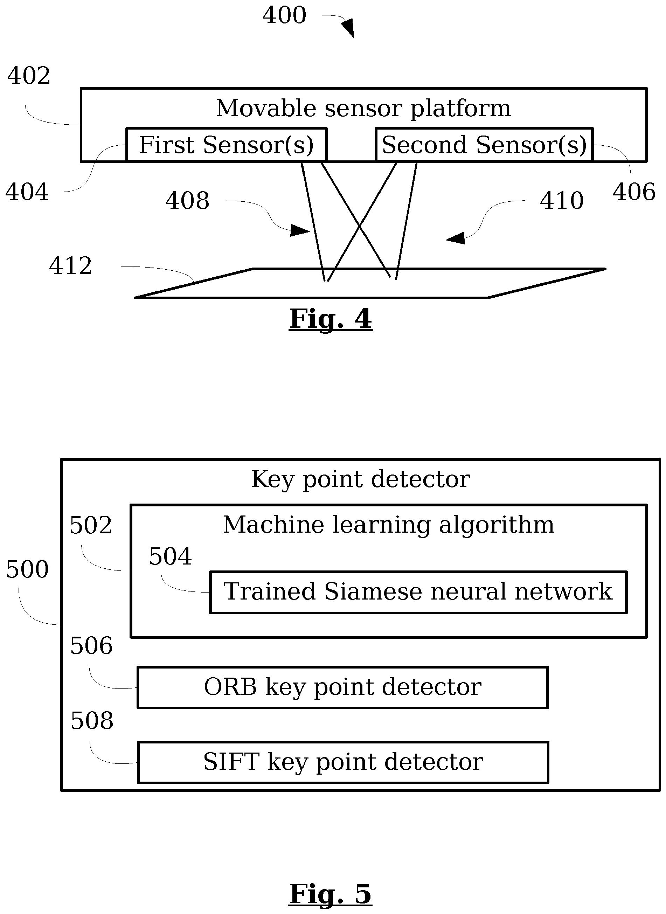

Figure 4 shows a schematic diagram of a scenario 400. A sensor platform 402 comprises one or more image sensors 404. In an example, sensor platform 402 comprises a digital camera as a first image sensor 404. The digital camera is adapted to capture images, in particular first image data 200 and some or all of the subsequent image data 300. However, the sensor platform 402 may comprise a plurality of image sensors 404, for example two or more digital cameras, in particular cameras that have overlapping fields of view. For example, the sensor platform 402 may comprise second sensor(s) 406 similar to first sensor(s) 404. First sensor(s) 404 may have a field of view 408, and second sensor(s) 406 may have a field of view 410 overlapping the first sensor's field of view 408. The sensor platform 402 may be static or movable.

The first sensor 404 may be adapted to capture image data 200 and second sensor 406 may be adapted to capture third image data 234. First and third image data may be connected by a correlation matrix that correlates positions of objects in the first image data to positions of the same objects in the third image data 234. For example, first image data 200 may include a composite image captured by two or more image sensors 404, and data from the two or more image sensors 404 may have been combined by image stitching to determine the composite image. The sensor platform 402 may be movable, and may comprise an aerial vehicle, such as an unmanned aerial vehicle. The image sensor 402 is adapted to capture the first image 201, the second image 301, and further images 400 that depict a portion 406 of the surface of the earth. It is preferred to use a downward facing camera with field of view 408 as an image sensor 402 because this allows capturing the portion 406 surface of the earth from a perspective similar to that of a satellite.

Figure 5 shows a block diagram of a key point detector 500. Key point detector 500 may include a machine learning algorithm 502, such as a trained Siamese neural network 504. An implementation is described in Christiansen et al.: UnsuperPoint: "End-to-end Unsupervised Interest Point Detector and Descriptor". arXiv: 1907.04011. This key point detector may be used for matching the first key points 204 in the first image data 200 to the corresponding key points 228 in the reference image data 224. This allows providing a small set of highly reliable key points. The key point detector 500 may also include an ORB key point detector 506 as described in Rublee et al.: "ORB: An efficient alternative to SIFT or SURF". ICCV 2011: 2564-2571. The key point detector may comprise a SIFT key point detector 508, as described in: Lowe: "Object Recognition from Local Scale-Invariant Features". Proc. of the International Conference on Computer Vision, Corfu (Sept. 1999). The ORB and SIFT key point detectors are preferred for determining key points on subsequent video frames 300. In particular, they may be used to determine a larger number of key points, whose locations may be matched to the first key points by least squares minimization. They may be classified and retained if classified as matching or discarded if classified as non-matching. This allows faster key point matching while at the same time benefiting from the reliability of the determination of the first key points. The key point detectors may allow determination of a confidence value for the key points.

### Reference signs

- 100: Computer-implemented method
- 102-142: Steps of method 100
- 200: First image data
- 202: First image
- 204: First key points
- 206: First pixel
- 208-214: First georeferences
- 216-222: First elevation data
- 224: Reference image data
- 226: Reference image
- 228: Corresponding key points
- 230: Second georeference related to first pixel
- 232: Second elevation data related to first pixel
- 234: Third image data
- 236: Second pixel
- 238: Second georeference related to second pixel
- 240: Second elevation data related to second pixel
- 300: Subsequent video frames
- 302: Second video frame
- 304: Second key points
- 306: Pixel
- 308: Optical flow
- 310: Initial displacement velocity vector
- 312: Further video frame
- 314: Intermediate video frame
- 316: Intermediate key points
- 400: Scenario
- 402: Sensor platform
- 404: First image sensor(s)
- 406: Second image sensor(s)
- 408: Field of view of the first sensor(s)
- 410: Field of view of the second sensor(s)
- 412: Part of the surface of the earth
- 500: Key point detector
- 502: Machine learning algorithm
- 504: Trained Siamese neural network
- 506: ORB key point detector
- 508: SIFT key point detector

## Claims

1. A computer-implemented method of georeferencing pixels in an image or video frame, the method comprising:
receiving first image data (200) of a first image (202) or a first video frame from one or more first image sensors (402), in particular one or more first image sensors (402) comprised by a, in particular static or movable, sensor platform (400), more particularly an aerial vehicle;
determining first georeferences (208, 210, 212, 214) of one or more, in particular a predetermined number of, first key points (204) in the first image data (200) based on matching the first key points (204) to corresponding key points (228) in georeferenced reference image data (224), in particular satellite data, different from the first image data (200); and
determining, based on the determined first georeferences (208, 210, 212, 214) of the first key points (204), a respective second georeference (230) of at least one pixel (206) in second image data from one or more of the first image sensors (402) and/or one or more second image sensors (406),
wherein the second image data includes in particular the first image data (200), the first video frame, third image data (232) and/or subsequently or previously received image data (300) of a second image (302) or a second video frame (302).

2. The method of claim 1, further comprising:
determining first elevation data (216, 218, 220, 222) of one or more of the first key points (204); and/or
determining second elevation data of the at least one pixel (232) based on the first georeferences (208, 210, 212, 214) and/or the first elevation data, in particular by interpolation of the first georeferences (208, 210, 212, 214) and/or by interpolation of the first elevation data (216, 218, 220, 222).

3. The method of any of the preceding claims, wherein determining the second georeference (230) includes tracking one or more of the first key points (204) on the second image data, to determine one or more second key points (302) on the second image data, wherein a number of tracked first key points (204) is preferably below a predetermined threshold.

4. The method of claim 3, wherein determining the second georeference (230) further includes determining the second georeference (230) of the at least one pixel (206) corresponding to, and/or included in, at least one of the tracked second key points (302) on the second image data (300).

5. The method of claim 3 or 4, wherein tracking the key points includes:
determining an optical flow (308) of at least one second video frame (302) comprised in the subsequent video frames (400) compared to a further video frame (312) preceding or following, preferably immediately preceding or following, the second video frame (302); and
determining the second key points (302) on the second video frame (302) based on the optical flow (308), preferably by translating the first key points (204) by an initial displacement velocity vector (310) proportional to the optical flow (308).

6. The method of claim 5, wherein determining an optical flow (308) includes:
determining one or more intermediate key points (316) on an intermediate video frame (314) comprised in the subsequent video frames, wherein the intermediate key points (316) correspond to the first key points (204); and
determining, based on the first and intermediate positions, the initial displacement velocity vector (310) indicative of an initial average optical flow (308).

7. The method of any of claims 3-6, wherein determining the second georeference (230) comprises:
computing a transform, preferably a homography, that maps the first key points (204) to the second key points (302); and
applying the transform to the first georeferences (208, 210, 212, 214) and/or one or more further georeferences in the first image data (200).

8. The method of any of the preceding claims, wherein determining the first georeferences (208, 210, 212, 214) comprises:
receiving the georeferenced reference image data (224); and
determining, by a machine learning algorithm (502), preferably a trained Siamese neural network (504), the first key points (204) on the first image data (200) and the corresponding key points (228) on the georeferenced reference image data (224).

9. The method of any of the preceding claims, comprising determining one or more second georeferences (230), and further comprising determining a pose of the movable platform (500) based on the first georeferences (208, 210, 212, 214) and/or the one or more second georeferences (230).

10. The method of any of the preceding claims, wherein determining of one or more key points includes application of an ORB key point detector (506) and/or SIFT key point detector (508).

11. A system comprising one or more processors and one or more storage devices, wherein the system is configured to perform the computer-implemented method of any one of claims 1-10.

12. A computer program product for loading into a memory of a computer, comprising instructions, that, when executed by a processor of the computer, cause the computer to execute a computer-implemented method of any of claims 1-10.

## Amended claims

### Amended claims in accordance with Rule 137(2) EPC.

1. A computer-implemented method of georeferencing pixels in an image or video frame, the method comprising:
receiving first image data (200) of a first image (202) or a first video frame from one or more first image sensors (402), in particular one or more first image sensors (402) comprised by a, in particular static or movable, sensor platform (400), more particularly an aerial vehicle;
determining first georeferences (208, 210, 212, 214) of one or more, in particular a predetermined number of, first key points (204) in the first image data (200) based on matching the first key points (204) to corresponding key points (228) in georeferenced reference image data (224), in particular satellite data, different from the first image data (200); and
determining, based on the determined first georeferences (208, 210, 212, 214) of the first key points (204), a respective second georeference (230) of at least one pixel (206) in second image data from one or more of the first image sensors (402) and/or one or more second image sensors (406),
wherein the second image data includes in particular the first image data (200), the first video frame, third image data (232) and/or subsequently or previously received image data (300) of a second image (302) or a second video frame (302),
wherein determining the second georeference (230) includes tracking one or more of the first key points (204) on the second image data, to determine one or more second key points (302) on the second image data, wherein a number of tracked first key points (204) is below a predetermined threshold.

2. The method of claim 1, further comprising:
determining first elevation data (216, 218, 220, 222) of one or more of the first key points (204); and/or
determining second elevation data of the at least one pixel (232) based on the first georeferences (208, 210, 212, 214) and/or the first elevation data, in particular by interpolation of the first georeferences (208, 210, 212, 214) and/or by interpolation of the first elevation data (216, 218, 220, 222).

3. The method of claim 1 or 2, wherein determining the second georeference (230) further includes determining the second georeference (230) of the at least one pixel (206) corresponding to, and/or included in, at least one of the tracked second key points (302) on the second image data (300).

4. The method of claim 3, wherein tracking the key points includes:
determining an optical flow (308) of at least one second video frame (302) comprised in the subsequent video frames (400) compared to a further video frame (312) preceding or following, preferably immediately preceding or following, the second video frame (302); and
determining the second key points (302) on the second video frame (302) based on the optical flow (308), preferably by translating the first key points (204) by an initial displacement velocity vector (310) proportional to the optical flow (308).

5. The method of claim 4, wherein determining an optical flow (308) includes:
determining one or more intermediate key points (316) on an intermediate video frame (314) comprised in the subsequent video frames, wherein the intermediate key points (316) correspond to the first key points (204); and
determining, based on the first and intermediate positions, the initial displacement velocity vector (310) indicative of an initial average optical flow (308).

6. The method of any of claims 3-5, wherein determining the second georeference (230) comprises:
computing a transform, preferably a homography, that maps the first key points (204) to the second key points (302); and
applying the transform to the first georeferences (208, 210, 212, 214) and/or one or more further georeferences in the first image data (200).

7. The method of any of the preceding claims, wherein determining the first georeferences (208, 210, 212, 214) comprises:
receiving the georeferenced reference image data (224); and
determining, by a machine learning algorithm (502), preferably a trained Siamese neural network (504), the first key points (204) on the first image data (200) and the corresponding key points (228) on the georeferenced reference image data (224).

8. The method of any of the preceding claims, comprising determining one or more second georeferences (230), and further comprising determining a pose of the movable platform (500) based on the first georeferences (208, 210, 212, 214) and/or the one or more second georeferences (230).

9. The method of any of the preceding claims, wherein determining of one or more key points includes application of an ORB key point detector (506) and/or SIFT key point detector (508).

10. A system comprising one or more processors and one or more storage devices, wherein the system is configured to perform the computer-implemented method of any one of claims 1-9.

11. A computer program product for loading into a memory of a computer, comprising instructions, that, when executed by a processor of the computer, cause the computer to execute a computer-implemented method of any of claims 1-9.
